# EUROPEAN PATENT APPLICATION

(11) **EP 4 582 383 A1**
(43) Date of publication of application: **09.07.2025**
(21) Application number: 24218316.8
(22) Date of filing: 09.12.2024
(51) Int. Cl.: C01C 1/04

(54) **AMMONIA SYNTHESIS SYSTEM AND OPERATION METHOD THEREOF**

(30) Priority: 08.01.2024 KR 20240002635; 08.02.2024 KR 20240019418
(71) Applicant: SK Innovation Co., Ltd., Seoul 03188 (KR)
(72) Inventor: SONG, Da Eun, 34124 Daejeon (KR); LEE, Jun Young, 34124 Daejeon (KR); IM, Ju Hwan, 34124 Daejeon (KR); JEONG, Jae Hun, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

An ammonia synthesis system, an operation method thereof, and an ammonia synthesis method are provided. The system includes a compressor for compressing mixed gas; a feed supply line for supplying the mixed gas to the compressor; an ammonia synthesis reactor for synthesizing ammonia by feeding the mixed gas compressed by the compressor into the reactor; a first ammonia separation device for separating syngas produced by the ammonia synthesis reactor into a sweep gas including nitrogen and hydrogen and into an ammonia rich gas; a second ammonia separation device for separating the ammonia rich gas into the ammonia and a regeneration stream including the nitrogen and the hydrogen; a feed recirculation line for recirculating the regeneration stream to the feed supply line; and a sweep gas recirculation line for recirculating the sweep gas to the ammonia synthesis reactor.

## Description

### TECHNICAL FIELD

Embodiments of the present disclosure generally relate to an ammonia synthesis system and an operation method thereof.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find ways for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and pressures of 8.5 atmospheres or higher, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the main raw material for the ammonia synthesis, may be produced by a water electrolyzer powered by renewable energy such as solar or wind energy, although these renewable energy sources have temporal variability. It is in this context that the embodiments of the present disclosure arise.

### SUMMARY

One embodiment of the present disclosure is directed to providing an ammonia synthesis system which may flexibly cope with a change in a flow rate that occurs during a production cycle.

Another embodiment of the present disclosure is directed to providing an ammonia synthesis system which may maintain a uniform flow rate distribution before a catalyst bed included in an ammonia synthesis reactor even when a flow rate of a raw material, such as hydrogen, fed into the ammonia synthesis system is decreased, in particular if the decrease in flow rate is substantial.

Still another embodiment of the present disclosure is directed to providing an ammonia synthesis system which may improve an ammonia synthesis yield by reducing a temperature deviation between the central part (also referred to as inner part) and the outer part (also referred to as outer side part) of a catalyst bed to be uniform at the beginning of its operation.

Another embodiment of the present disclosure is directed to providing an ammonia synthesis system which may improve an ammonia synthesis yield at the beginning of its operation by preheating a catalyst bed before the beginning of its operation.

Another embodiment of the present disclosure is directed to providing an ammonia synthesis system which may save energy by reducing an amount of energy required by the system during its operation.

Another embodiment of the present disclosure is directed to providing an ammonia synthesis system which may increase a catalyst replacement cycle by uniformly using each catalyst bed during the operation.

Another embodiment of the present disclosure is directed to providing an ammonia synthesis system which may have a stably operating compressor by preventing that a surge phenomenon or a similar disturbance or phenomenon may occur in the compressor even when a flow rate of a raw material fed into the ammonia synthesis system is changed.

Another embodiment of the present disclosure is directed to providing an ammonia synthesis system which can flexibly cope with ammonia separation even when an ammonia production volume is changed as a flow rate of a raw material fed into the ammonia synthesis system is changed.

Another embodiment of the present disclosure is directed to providing an ammonia synthesis system which can reduce energy required for separating ammonia and reduce costs incurred when installing a device used for separating ammonia even when an ammonia production volume changes or is changed, as a flow rate of a raw material fed into the ammonia synthesis system changes or is changed.

In one embodiment, provided is an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; a first ammonia separation device for separating syngas produced by the ammonia synthesis reactor into a sweep gas including nitrogen and hydrogen and into an ammonia rich gas; a second ammonia separation device for separating the ammonia rich gas into the ammonia and a regeneration stream including the nitrogen and the hydrogen; a feed recirculation line for recirculating the regeneration stream to the feed supply line; and a sweep gas recirculation line for recirculating the sweep gas to the ammonia synthesis reactor.

The compressor for compressing mixed gas for being fed into the reactor may be a first compressor, while in further embodiments one or more additional (second) compressor(s) may optionally provided for compressing gases from other gas-containing lines before being additioanlly fed into the reactor.

The first ammonia separation device may use a separation membrane to separate the syngas.

The separation membrane may include at least one or more selected from the group consisting of natural or synthetic polymers, sulfonated compounds, zeolite framework membranes, polymers including metal salts, ion exchange polymer membranes, and cellulose membranes.

The second ammonia separation device may cool and separate the ammonia rich gas.

The system may further include a reactor recirculation line connected from the feed recirculation line to the ammonia synthesis reactor.

In the reactor recirculation line, a second compressor may be disposed for compressing the regeneration stream for being fed into the ammonia synthesis reactor.

The ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

The system may further include a microwave heating device for emitting microwaves to each of the two or more catalyst beds.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate, a plurality of upper apertures may be formed in a side surface of an upper part of the mixed gas flow pipe spaced apart from each other along a circumference of the pipe, a plurality of middle apertures may be formed in a side surface of a middle part of the mixed gas flow pipe spaced apart from each other along the circumference, a plurality of lower apertures may be formed in a side surface of a lower part of the mixed gas flow pipe spaced apart from each other along the circumference, and optionally the mixed gas flow pipe may include a cover surrounding at least some regions of the side surface of the mixed gas flow pipe to provide a space for a fluid flowing out of the side surface of the mixed gas flow pipe after passing through the upper aperture to be guided toward the middle aperture.

The mixed gas flow pipe may further include a separator plate dividing the upper and middle parts of the mixed gas flow pipe from each other.

The system may further include a heat exchanger disposed downstream from each of the two or more catalyst beds to remove heat from an effluent of the catalyst bed.

In another embodiment, provided is an operation method of the ammonia synthesis system described above, which further includes a first ammonia separation device bypass line and a second ammonia separation device bypass line, the method including the following selectively performed modes: a two-stage separation mode in which the syngas passes through the first ammonia separation device and the ammonia rich gas separated from the first ammonia separation device passes through the second ammonia separation device; a first ammonia separation device bypass mode in which the syngas is directly fed into the second ammonia separation device through the first ammonia separation device bypass line; and a second ammonia separation device bypass mode in which the ammonia rich gas is not fed into the second ammonia separation device through the second ammonia separation device bypass line.

In still another embodiment, provided is an ammonia synthesis method including compressing mixed gas by a compressor and feeding the compressed gas into an ammonia synthesis reactor; producing syngas including ammonia by reacting the compressed mixed gas by the ammonia synthesis reactor; performing a preliminary separation of separating the syngas into sweep gas including nitrogen and hydrogen, and ammonia rich gas; and performing a secondary separation of separating the ammonia rich gas into the ammonia and a regeneration stream including the nitrogen and the hydrogen, wherein the sweep gas is recirculated to the ammonia synthesis reactor.

The ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

Other features and aspects will be apparent from the following detailed description, the drawings, and the claims.

### BRIEF DESCRIPTION OF THE DRAWINGS

FIG. 1 is a schematic view showing an ammonia synthesis reactor according to an embodiment of the present disclosure.
FIG. 2 is a schematic view showing an ammonia synthesis reactor according to another embodiment of the present disclosure.
FIG. 3 is a perspective view showing a distribution plate and a mixed gas flow pipe according to another embodiment of the present disclosure.
FIG. 4 is a perspective view showing the inside of the mixed gas flow pipe according to another embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to another embodiment of the present disclosure.
FIG. 7 is a view showing a state where the backflow prevention cap of the backflow prevention plate is opened according to another embodiment of the present disclosure.
FIG. 8 shows a process flow view of the ammonia synthesis system according to another embodiment of the present disclosure.

### DETAILED DESCRIPTION

Various advantages and features of the present disclosure and methods for accomplishing the same are apparent from embodiments described in detail below. However, the embodiments of the present disclosure are not limited to the embodiments disclosed below and may be implemented in various different forms. These embodiments are provided to allow those skilled in the art to appreciate the scope of the present disclosure.

Unless defined otherwise, all terms (including technical and scientific terms) used in the specification have the same meanings as understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the extent and width of the defined range, all values delimited by those limits, and all possible combinations of the upper and lower limits of a numerical range delimited by different extents. The defined numerical range may also include values outside the numerical range, which may occur due to experimental errors or rounding of values unless otherwise specified in the specification.

A term "to include" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower", or terms like "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

In the specification, "regeneration stream" and "sweep gas" indicate gas including hydrogen and nitrogen, and may further include a small amount of unseparated ammonia.

In the specification, "mixed gas" indicates gas including at least one or both selected from the group consisting of hydrogen and nitrogen.

In the specification, the terms "syngas" and "ammonia rich gas" indicate gas including ammonia and unreacted hydrogen and nitrogen.

Renewable energy, such as the solar energy or wind energy, shows temporal variability. For example, the solar energy is unable to be used at night. Therefore, an ammonia synthesis system is unable to be always operated at a constant flow rate, and it is thus necessary to anticipate and handle a change in the flow rate that occurs during a production cycle.

In addition, a non-uniform flow rate distribution before a catalyst bed included in an ammonia synthesis reactor may be increased when a flow rate of the raw material such as hydrogen fed into the ammonia synthesis system is decreased.

In addition, in a conventional ammonia synthesis system, a temperature deviation may occur between the central and outer parts of the catalyst bed especially at the beginning of its operation, which may reduce an ammonia synthesis yield.

In addition, when the flow rate of the raw material fed into the ammonia synthesis system is changed, for example, when the flow rate of the fed raw material is decreased, a surge phenomenon may occur in a compressor, thus making it difficult to perform a stable compressor operation.

In addition, when the flow rate of the raw material fed into the ammonia synthesis system is changed, an ammonia production volume may be changed as the flow rate of the raw material is changed, thus making it difficult to optimize energy used for separating ammonia.

In addition, when the flow rate of the raw material fed into the ammonia synthesis system is changed, a device used for separating ammonia is required to be constructed and operated at a scale suitable for the maximum production volume although the ammonia production volume changes as the flow rate of raw materials changes, which may incur excessive costs when installing the device.

Therefore, there is a need for an ammonia synthesis system which may cope with the change in the flow rate that occurs during the production cycle, while preventing the surge phenomenon from occurring in the compressor and permitting stable compressor operation, which may address the issues of non-uniform flow rate distribution that occurs before the catalyst bed and a reduced ammonia synthesis yield caused by the temperature deviation between the central and outer parts of the catalyst bed at the beginning of the operation, and which may reduce the energy used for separating ammonia and reduce the costs incurred when installing the device used for separating ammonia.

Hereinafter, an ammonia synthesis system of the present disclosure is described in detail. However, the embodiments are only illustrative, and the present disclosure is not limited to the specific embodiments described below.

The present disclosure may provide an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; a first ammonia separation device for separating syngas produced by the ammonia synthesis reactor into a sweep gas including nitrogen and hydrogen and into an ammonia rich gas; a second ammonia separation device for separating the ammonia rich gas into ammonia and a regeneration stream including nitrogen and hydrogen; a feed recirculation line for recirculating the regeneration stream to the feed supply line; and a sweep gas recirculation line for recirculating the sweep gas to the ammonia synthesis reactor.

The ammonia synthesis system of the present disclosure may flexibly cope with changes in a flow rate that occur during a production cycle, while preventing a surge phenomenon from occurring in the compressor to permit stable compressor operation, may address issues of a non-uniform flow rate distribution that occurs before a catalyst bed and a reduced ammonia synthesis yield caused by a temperature deviation between the central and outer parts of the catalyst bed at the beginning of its operation, and may reduce energy used for separating ammonia and thereby reduce costs incurred when installing a device used for separating ammonia. In particular, in the ammonia synthesis system of the present disclosure, the compressor may stably operate by preventing that the surge phenomenon (or similar phenomenon or disturbance) occurs in the compressor even when the flow rate of a raw material fed by a feed supply line into the ammonia synthesis system is changed or is changing. This configuration is possible by supplying the regeneration stream (separated by the second ammonia separation device) through a feed recirculation line to the feed supply line, which is disposed before the compressor.

Further, the ammonia synthesis system according to one embodiment of the present disclosure may provide a flexible process operation by flexibly coping with the ammonia separation even when an ammonia production volume is changing or is changed, as the flow rate of the raw material fed into the ammonia synthesis system is changing or is changed. Furthermore, the ammonia synthesis system according to one embodiment of the present disclosure may reduce the energy required for separating ammonia and reduce the costs incurred when separating ammonia, even when the ammonia production volume is changing or is changed as the flow rate of the raw material fed into the ammonia synthesis system is changing or is changed.

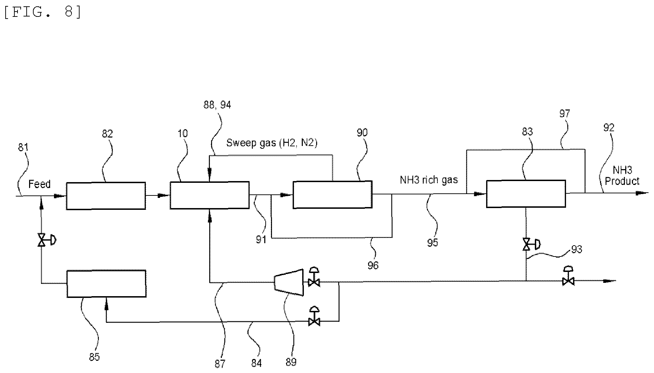

FIG. 8 shows a process flow view of the ammonia synthesis system according to one embodiment of the present disclosure. Referring to FIG. 8, the mixed gas may be fed into a compressor 82 (a first compressor) through a feed supply line 81. The mixed gas compressed by the compressor 82 may be fed into an ammonia synthesis reactor 10. Syngas 91 produced through the reaction by the ammonia synthesis reactor 10 may be fed into a first ammonia separation device 90 and separated into sweep gas 94 including nitrogen and hydrogen, and ammonia rich gas 95. The sweep gas 94 may be recirculated to the ammonia synthesis reactor 10 through a sweep gas recirculation line 88. The ammonia rich gas 95 may be fed into a second ammonia separation device 83 and separated into ammonia 92 and a regeneration stream 93 including nitrogen and hydrogen. The regeneration stream 93 may be recirculated to the feed supply line 81 through a buffer tank 85 along a feed recirculation line 84. The regeneration stream 93 may also be recirculated to the ammonia synthesis reactor 10 through a reactor recirculation line 87, connected to the ammonia synthesis reactor 10, from the feed recirculation line 84 through a second compressor 89.

In detail, when the flow rate of the syngas including ammonia is high or relatively high, or when the ammonia content in the syngas is large or relatively large, an ammonia synthesis system 1 may primarily separate ammonia by using a first ammonia separation device 90 including an ammonia separation membrane, and secondly cool and separate ammonia by using the second ammonia separation device 83. On the other hand, when the flow rate of the syngas including ammonia is low or relatively low, or when the ammonia content in the syngas is small or relatively small, the ammonia synthesis system may separate ammonia by only using the first ammonia separation device 90 including the ammonia separation membrane, or by cooling and separating ammonia by only using the second ammonia separation device 83. That is, the ammonia synthesis system according to the present disclosure may provide a flexible process by flexibly coping with an ammonia production flow rate that may be changed during the production cycle while performing appropriate ammonia separation. In addition, when the flow rate of the syngas including ammonia is low or the ammonia content in the syngas is small, the ammonia synthesis system may prevent use of an excessive cooling capacity, thereby reducing the energy used for separating ammonia and reducing the costs incurred when separating ammonia.

The syngas discharged from the ammonia synthesis reactor may include ammonia in an amount ranging from 1 to 90 vol%, 1 to 50 vol%, 5 to 30 vol%, or 10 to 20 vol% relative to the total syngas.

The ammonia synthesis system may include the first ammonia separation device 90 for separating the syngas produced by the ammonia synthesis reactor 10 into the ammonia rich gas 95 and the sweep gas 94 including nitrogen and hydrogen. The first ammonia separation device 90 may function to separate the syngas produced by the ammonia synthesis reactor 10 into the ammonia rich gas 95 and the sweep gas 94 including nitrogen and hydrogen.

In another embodiment according to the present disclosure, the first ammonia separation device 90 may separate the syngas by using a separation membrane. The first ammonia separation device 90 may include the separation membrane. The separation membrane may have a shape appropriately modified based on conventional technology, and included in the first ammonia separation device 90.

In another embodiment according to the present disclosure, the separation membrane may include at least one or more selected from the group consisting of natural or synthetic polymers, sulfonated compounds, zeolite framework membranes, polymers including metal salts, ion exchange polymer membranes, and cellulose membranes.

In addition, in another embodiment according to the present disclosure, the separation membrane may include at least one or more selected from the group consisting of polysiloxane, polyester, polyimide, polyamide, polysulfone polymer, brominated polyphenylene oxide, cellulose acetate, ethyl cellulose, polyethylene, polypropylene, polybutadiene, polyisoprene, polystyrene, polyvinyl, polycarbonate, polyarylether, and polyperfluorosulfonate.

The first ammonia separation device 90 may achieve ammonia separation efficiency by including the separation membrane having the material mentioned above. The separation using the separation membrane may be performed once or performed twice or more as needed. In addition, the separation using the separation membrane may be performed once or performed twice or more by using one separation membrane. Alternatively, the separation may be performed once or performed twice or more by using two or more different separation membranes. The material and number of separation cycles of the separation membrane may be appropriately selected based on a process operation condition such as the syngas or the flow rate of ammonia.

In detail, the first ammonia separation device 90 may include the separation membrane to thus efficiently function to separate the syngas produced by the ammonia synthesis reactor into the ammonia rich gas 95 and the sweep gas 94 including nitrogen and hydrogen. The sweep gas may be maintained at a pressure ranging from 1 to 99.9999%, 20 to 99.9999%, 30 to 99.9%, or 50 to 99% relative to a pressure of the syngas. In addition, the ammonia rich gas may be maintained at a pressure ranging from 0.1 to 95%, 0.1 to 80%, 1 to 70%, 3 to 60%, or 5 to 50% relative to the pressure of the syngas.

The sweep gas 94 may be recirculated to the ammonia synthesis reactor 10 through the sweep gas recirculation line 88. In this way, the first ammonia separation device 90 may preliminarily separate ammonia, thus significantly reducing a cooling load required by the second ammonia separation device 83. In addition, the first ammonia separation device 90 may recirculate the sweep gas 94 to the ammonia synthesis reactor 10 to thus efficiently cope with changes in the flow rate of the ammonia synthesis raw material. For example, the flow rate of the raw material fed into the ammonia synthesis reactor 10 may be uniformly maintained by increasing the flow rate of the sweep gas 94 recirculated to the ammonia synthesis reactor 10 when the flow rate of the raw material fed into the reactor is low, and decreasing the flow rate of the recirculated sweep gas 94 or not recirculating the sweep gas 94 when the flow rate of the raw material fed into the reactor is high. The sweep gas recirculation line 88 may include a flow regulating device to perform such an operation.

The sweep gas recirculation line 88 may be directly connected to the ammonia synthesis reactor 10. In addition, the sweep gas recirculation line 88 may be connected to each of mixed gas supply lines described below or connected to one of the mixed gas supply lines. In addition, the sweep gas recirculation line may be connected to a main header of the mixed gas supply line described below, but the embodiments are not limited thereto.

A flow regulating device may be installed in the sweep gas recirculation line 88. The flow regulating device may be installed in the sweep gas recirculation line 88 to regulate the flow rate of the sweep gas fed into the reactor, thereby being operated to flexibly cope with changes in the flow rate of the raw material.

In the ammonia synthesis system, buffer tank 85 may be installed in the feed recirculation line 84. The buffer tank 85 may be installed in the feed recirculation line 84 to store the regeneration stream flowing in through the feed recirculation line 84, thereby coping with changes in the flow rate of the ammonia synthesis raw material. For example, when the flow rate of the raw material fed into the compressor 82 is high, the regeneration stream may be stored in the buffer tank 85 instead of being supplied to the feed supply line 81. In addition, when the flow rate of the raw material fed into the compressor is low, the surge phenomenon may occur in the compressor, which may be prevented by supplying the regeneration stream stored in the buffer tank 85 to the feed supply line 81. The buffer tank 85 may provide a flexible supply of the regeneration stream to cope with changes in the flow rate of the raw material and permit stable compressor operation.

In addition, a flow regulating device may be installed upstream of the buffer tank 85 in the feed recirculation line. The flow regulating device may be installed upstream of the buffer tank 85 to regulate the flow rate of the regeneration stream flowing into the buffer tank 85, thereby flexibly coping with changes in the flow rate.

The flow regulating device may be installed downstream from the buffer tank 85 in the feed recirculation line. The flow regulating device may be installed downstream from the buffer tank 85 to regulate the flow rate of the regeneration stream ultimately supplied to the feed supply line 81. For example, when the flow rate of the fed raw material is high, the flow regulating device may be closed for the regeneration stream to be stored in the buffer tank 85 rather than the regeneration stream being supplied to the feed supply line 81. In addition, when the flow rate of the fed raw material is low, the surge phenomenon may occur in the compressor, which may be prevented by opening the flow regulating device and supplying the regeneration stream stored in the buffer tank 85 to the feed supply line 81. The flow regulating device may provide a flexible supply of the regeneration stream to cope with changes in the flow rate of the raw material and permit stable compressor operation.

In another embodiment according to the present disclosure, the ammonia synthesis system may include the second ammonia separation device 83 for separating the ammonia rich gas 95 into the ammonia 92 and the regeneration stream 93. The ammonia separation may be performed by a conventional method.

The second ammonia separation device 83 may cool and separate the ammonia rich gas 95. In detail, the ammonia separation may be performed by cooling the ammonia rich gas to separate the gas and liquid from each other. The gas-liquid separation may be performed once or performed twice or more.

The second ammonia separation device 83 may cool the ammonia rich gas by exchanging heat with a refrigerant. The refrigerant may include at least one or more selected from the group consisting of chlorofluorocarbons (CFCs), hydrochlorofluorocarbons (HCFCs), hydrofluorocarbons (HFCs), hydrofluoroolefins (HFOs), fluorinated ether compounds, hydrocarbons, ammonia, water, air, carbon dioxide, and sulfur dioxide, but the embodiments are not limited thereto.

The ammonia rich gas may include ammonia ranging from 10 to 90 vol%, 20 to 80 vol%, or 30 to 60 vol% relative to the total ammonia rich gas.

The gas-liquid separation may be performed by condensing (in ranges of) 50 to 99.9999 vol%, 60 to 99.999 vol%, or 70 to 99.99 vol% of ammonia included in the ammonia rich gas.

The gas-liquid separation may be performed by condensing ammonia at a temperature ranging from -150 to 200°C or -100 to 50°C. In addition, the gas-liquid separation may be performed by condensing ammonia under a pressure ranging from 0.0001 to 30 megapascal (MPa) or 0.007 to 20.0 MPa.

The second ammonia separation device 83 may be at least one or more selected from the group consisting of a spiral heat exchanger, a plate heat exchanger, a double-tube heat exchanger, a multi-tube cylindrical heat exchanger (shell-and-tube heat exchanger), a multi-tubular heat exchanger, a spiral tube heat exchanger, and a spiral plate heat exchanger, but the embodiments are not limited thereto.

In addition, the ammonia synthesis system 83 may further include an adsorption device including an adsorbent and installed before or after the second ammonia separation device 83.

The adsorbent may be at least one or more selected from the group consisting of silica gel, zeolite, and activated carbon, is not limited thereto, and may use a conventional adsorbent.

In another embodiment according to the present disclosure, the ammonia synthesis system may further include the reactor recirculation line 87 connected from the feed recirculation line 84 to the ammonia synthesis reactor 10. The second compressor 89 may be installed in the reactor recirculation line 87. The regeneration stream, which has its pressure reduced by undergoing the two-stage separation, by the second compressor 89 may be pressurized and re-fed into the ammonia synthesis reactor 10. In particular, the flow rate of the raw material fed into the ammonia synthesis reactor 10 may be maintained to be constant by re-feeding the regeneration stream into the ammonia synthesis reactor 10 through the reactor recirculation line 87 even when the raw material flow rate is changed. For example, if the flow rate of the raw material fed into the reactor is high (e.g., above the capacity of one or more components in the ammonia synthesis system), the ammonia synthesis reactor may be operated for the regeneration stream not to be fed through the recirculation line 87. On the other hand, when the flow rate of the raw material fed into the reactor is low (e.g., below the capacity of one or more components in the ammonia synthesis system)), the ammonia reaction may be operated stably by operating the regeneration stream to be fed into the reactor 10 through the reactor recirculation line 87 for the flow rate of the raw material fed into the ammonia synthesis reactor to be maintained constant.

The reactor recirculation line 87 may be directly connected to the ammonia synthesis reactor 10. In addition, the reactor recirculation line 87 may be connected to each of the mixed gas supply lines described below or connected to one of the mixed gas supply lines. In addition, the reactor recirculation line 87 may be connected to the main header of the mixed gas supply line described below, but the embodiments are not limited thereto.

The flow regulating device (described above) may be installed in the reactor recirculation line. The flow regulating device may be installed in the reactor recirculation line 87 to thus regulate the flow rate of the regeneration stream fed into the reactor, thereby being operated flexibly to cope with changes in the flow rate of the raw material.

The ammonia synthesis system of the present disclosure may further include a first ammonia separation device bypass line. The syngas may be fed directly from ammonia synthesis reactor 10 to the second ammonia separation device 83 through the first ammonia separation device bypass line 96.

In addition, the ammonia synthesis system may further include a second ammonia separation device bypass line. The ammonia rich gas 95 may be fed directly to a post-treatment process or to a storage tank, through the second ammonia separation device bypass line 97.

In detail, when the flow rate of the syngas including ammonia is high or the ammonia content in the syngas is large, the ammonia synthesis system may primarily separate ammonia by using the first ammonia separation device 90 including the ammonia separation membrane, and secondly cool and separate ammonia by using the second ammonia separation device 83. On the other hand, when the flow rate of the syngas including ammonia is low or the ammonia content in the syngas is small, the ammonia synthesis system may separate ammonia by performing the separation by only using the first ammonia separation device 90 including the ammonia separation membrane rather than using the second ammonia separation device through the second ammonia separation device bypass line, or by cooling and separating ammonia by only using the second ammonia separation device 83 through the first ammonia separation device bypass line. That is, in one embodiment, the ammonia synthesis system according to the present disclosure may include a bypass line to perform the appropriate ammonia separation by flexibly coping with the ammonia production flow rate which may be changed during the production cycle, thereby providing the flexible process. In addition, when the flow rate of the syngas including ammonia is low or the ammonia content in the syngas is small, the ammonia synthesis system may prevent the use of the excessive cooling capacity, thereby reducing the energy used for separating ammonia and reducing the costs incurred when separating ammonia.

In another embodiment according to the present disclosure, the ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and the mixed gas supply lines arranged to supply the mixed gas to each distribution device.

In addition, the ammonia synthesis reactor may further include at least one microwave heating device for emitting microwaves to each of the two or more catalyst beds.

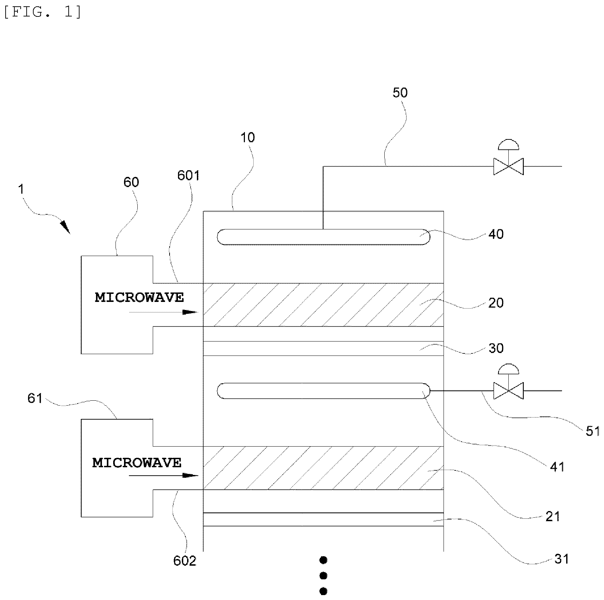

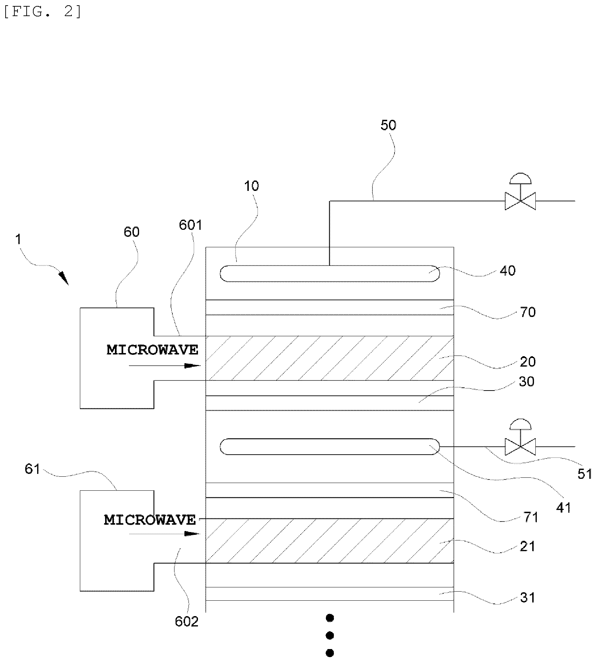

Referring to FIGS. 1 and 2, according to one embodiment of the present disclosure, provided is the ammonia synthesis reactor 10 including two or more catalyst beds 20 and 21; a backflow prevention plate 30 or 31 disposed downstream from each of the catalyst beds and preventing the backflow of the mixed gas; a distribution device 40 or 41 disposed upstream from each of the two or more catalyst beds 20 and 21 and distributing the mixed gas to the catalyst bed 20 or 21; mixed gas supply lines 50 and 51 arranged to supply the mixed gas to each distribution device 40 or 41; and a microwave heating device 60 or 61 for emitting the microwaves to each of the two or more catalyst beds 20 and 21.

Hereinafter, the ammonia synthesis reactor including two catalyst beds may be an example of the ammonia synthesis reactor 10 of the present disclosure. The ammonia synthesis reactor 10 according to one embodiment of the present disclosure may include two or more catalyst beds, for example, three, four, five, seven, or ten catalyst beds (generally indicated in Figs 1 and 2 by a dotted line). The embodiments are not limited to these numbers of catalyst beds.

The ammonia synthesis system according to another embodiment of the present disclosure may cope with changes in the flow rate that occur during the production cycle by including the mixed gas supply line to supply the mixed gas to each of the two or more catalyst beds. For example, the ammonia synthesis system may be operated by feeding the gas through the mixed gas supply line 50 disposed at the top for the gas to first pass through the catalyst bed 20 disposed at the top when the flow rate of the fed raw material is high, and operated by feeding the mixed gas through the mixed gas supply line 51 disposed at the bottom for the gas to pass through the catalyst bed 21 disposed at the bottom rather than the catalyst bed 20 disposed at the top when the flow rate of the fed raw material is low. Here, the backflow of the mixed gas may be prevented by the backflow prevention plate 30 when the mixed gas is fed through the mixed gas supply line 51 disposed at the bottom to pass through the catalyst bed 21 disposed at the bottom.

Here, in the specification, the flow rate that can be changed during the production cycle may be classified into three categories for the sake of convenience, not limitation. The flow rate may be classified into a relatively low or relatively high flow rates, or may be classified into a low flow rate, a medium flow rate, and a high flow rate. However, the change in the flow rate may be regulated. The relatively low or low flow rate case may indicate a case where the flow rate is less than half (50%) of an annual average production flow rate (100%), the medium flow rate case may indicate a case where the flow rate is half (50%) or more and less than twice (200%) of the annual average production flow rate (100%), and the relatively high or high flow rate case may indicate a case where the flow rate is more than twice (200%) of the annual average production flow rate (100%). However, the embodiments are not limited to these flowrates or classifications.

In the low flow rate case as described above, there is no need to maintain a temperature of the entire reactor because the ammonia synthesis system may be operated by feeding the mixed gas through the mixed gas supply line 51 disposed at the bottom for the gas to pass through the catalyst bed 21 disposed at the bottom. Therefore, energy may be saved by reducing an amount of energy required by the system as needed during its operation.

In addition, the ammonia synthesis system may increase the catalyst replacement cycle by using each catalyst bed uniformly during its operation. In general, when a reaction fluid has the low flow rate, distribution performance at the top of the catalyst bed may be reduced, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to lower distribution performance caused by a reduced flow rate. However, the catalyst replacement cycle may be increased by relatively uniformly using the catalyst beds if a height of the catalyst bed through which the gas passes is changed based on the flow rate, in which case the distribution performance of each catalyst bed is improved, as in one embodiment of the ammonia synthesis system according to the present disclosure.

In addition, the ammonia synthesis system according to another embodiment of the present disclosure may include the microwave heating devices 60 and 61 to permit the temperature between the central and outer parts of the catalyst bed to be made more uniform (less temperature deviation) at the beginning of its operation, thereby improving an ammonia synthesis yield. In detail, the microwave heating device may permit the temperatures between the central and outer parts of the catalyst bed to be more uniform by emitting the microwaves to the catalyst bed at the beginning of the operation. In addition, the microwave heating device may improve the ammonia synthesis yield at the beginning of the operation by preheating the catalyst bed which may otherwise be not sufficiently preheated at the beginning of the operation.

For example, when the fed raw material has the low flow rate, the ammonia synthesis system may be operated for the gas to pass through the catalyst bed 21 disposed at the bottom rather than the catalyst bed 20 disposed at the top. Here, the mixed gas may not be fed into the catalyst bed 20 disposed at the top, and a temperature of the catalyst bed 20 disposed at the top may thus be decreased over time. If the catalyst bed 20 disposed at the top is used again after this decrease, the ammonia synthesis efficiency may be lower because the temperature of the catalyst bed 20 disposed at the top is decreased. Here, the catalyst bed 20 disposed at the top, which has the lower temperature, may be preheated by the microwaves emitted by the microwave heating device, thus achieving excellent ammonia synthesis efficiency even when the catalyst bed is used again for the operation.

One or more, two or more, three or more, four or more, five or more, or eight or more microwave heating devices may be installed on each catalyst bed, and the number of microwave heating devices is not limited thereto. The number of the microwave heating devices may be increased based on a size of the reactor, and an installation location of the microwave heating device may be adjusted for efficient microwave emission.

The ammonia synthesis system may further include microwave guides 601 and 602. The microwave guides may enable the microwaves emitted by the microwave heating device to reach the catalyst bed more efficiently. The shape or installation location of the guides may be changed based on a microwave waveform.

In another embodiment according to the present disclosure, the number of catalyst beds may be two or more, three or more, four or more, five or more, six or more, seven or more, ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same as each other.

In one embodiment according to the present disclosure, the mixed gas may include at least one gas or both gasses selected from the group consisting of hydrogen and nitrogen.

Hydrogen may be produced by a device powered by renewable energy. In detail, hydrogen may be produced by a water electrolyzer powered using renewable energy.

Renewable energy may include at least one or more selected from the group consisting of solar energy, photovoltaic energy, bioenergy, wind energy, hydroelectric energy, geothermal energy, ocean energy, and waste energy. Renewable energy shows temporal variability. For example, solar energy is unable to be used at night. Therefore, when hydrogen is produced using the device powered by renewable energy, the ammonia synthesis system is unable to be always operated at a constant flow rate. That is, there is a need for the ammonia synthesis system which may cope with the change in the flow rate that occurs during the production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a way of cooling the mixed gas flowing in the ammonia synthesis system. For example, the mixed gas having the low temperature may be used as the cooling mechanism to cool the mixed gas fed into the catalyst bed.

The ammonia synthesis system according to another embodiment of the present disclosure may further include distribution plates 70 and 71 each disposed between the catalyst bed 20 or 21 and the distribution device 40 or 41.

In addition, the ammonia synthesis system according to another embodiment of the present disclosure may further include a plurality of mixed gas flow pipes 720 which are fixed to a lower surface 72 of the distribution plate 70 or 71 and through which the mixed gas flows.

The ammonia synthesis system may further include the distribution plate and the mixed gas flow pipe, thereby maintaining an uniform flow rate distribution before the catalyst bed included in the ammonia synthesis reactor even when the flow rate of the fed raw material such as hydrogen is reduced.

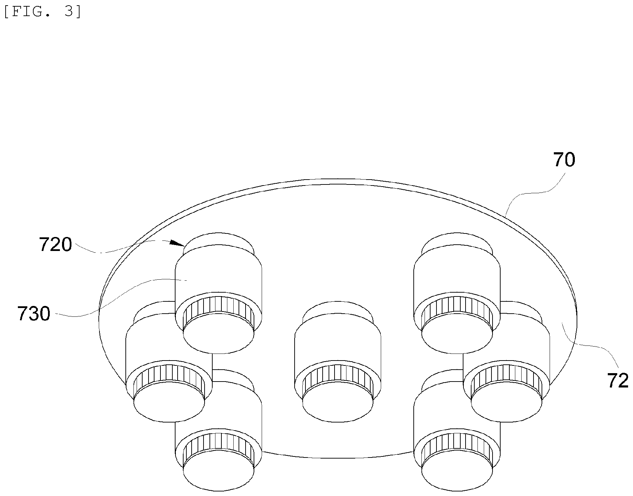

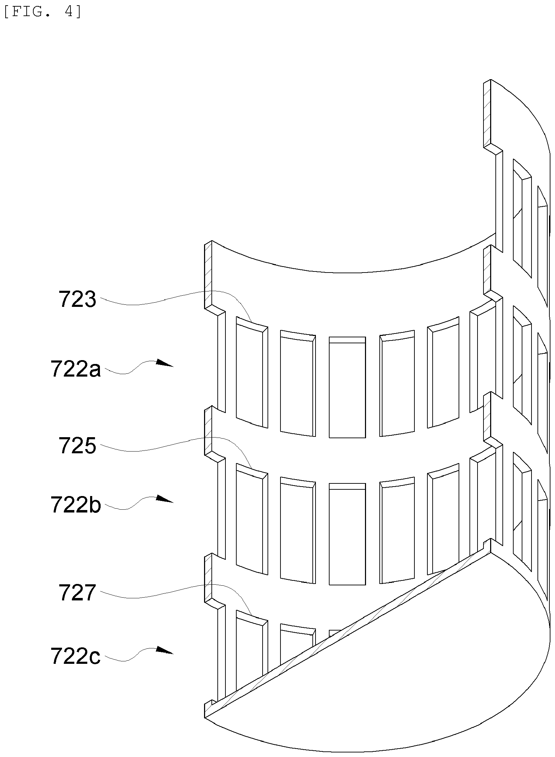

Referring to FIGS. 3 and 4, the mixed gas flow pipe 720 may have a bottom surface and a side surface 722 connecting the bottom surface with the distribution plate.

A plurality of upper apertures 723 may be formed in a side surface of an upper part 722a of the mixed gas flow pipe 720 spaced apart from each other along a circumference of the pipe 720, a plurality of middle apertures 725 may be formed in a side surface of a middle part 722b of the mixed gas flow pipe 720 spaced apart from each other along the circumference, and a plurality of lower apertures 727 may be formed in a side surface of a lower part 722c of the mixed gas flow pipe 720 spaced apart from each other along the circumference. A flow of the mixed gas may be formed through the upper aperture 723, the middle aperture 725, and the lower aperture 727. The mixed gas flow pipe 720 may include a cover 730 surrounding at least some regions of the side surface of the mixed gas flow pipe 720 to provide a space for the fluid flowing out of the side surface of the mixed gas flow pipe 720 after passing through the upper aperture 723 to be guided toward the middle aperture 725. The cover 730 may surround at least one selected from the group consisting of the upper and middle parts of the side surface of the mixed gas flow pipe 720.

The cover 730 may cause the fluid flowing out of the side surface of the mixed gas flow pipe 720 after passing through the upper aperture 723 to be guided toward the middle aperture 725. This configuration may form a flow in which the fluid is moved to the outside of the side surface of the mixed gas flow pipe 720 and then moved back to the inside of the side surface. Through the flow formed in this way, the fluids may be more smoothly mixed with each other.

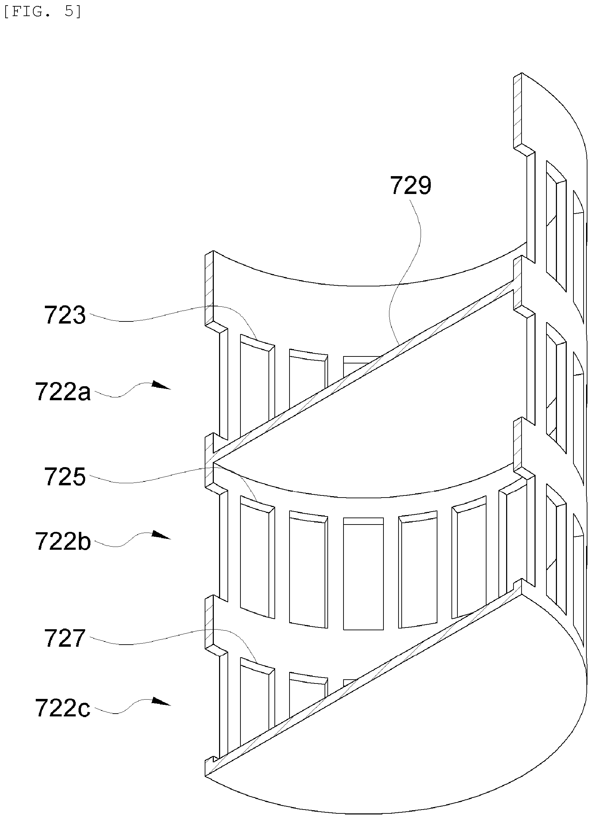

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the movement of the fluid. Therefore, the fluid flowing into the upper part of the mixed gas flow pipe 720 may by the separator plate 729 flow out through the upper aperture 723 into the space between the mixed gas flow pipe 720 and the cover 730 rather than descending directly to the middle part. The fluid in the space may then flow into the mixed gas flow pipe through the middle aperture 725, descend downwards, and flow out of the mixed gas flow pipe 720 through the lower aperture 727. As described above, the fluid may form the flow in which the fluid flows out of the mixed gas flow pipe 720, flows back into the inside of the pipe, and flows out of the pipe again, thereby mixing the fluids more smoothly, and maintaining the uniform flow rate distribution before the catalyst bed.

In another embodiment according to the present disclosure, each of the mixed gas supply lines 50 and 51 may include a flow regulating device. The flow regulating device may permit the flow rate of the mixed gas to be controlled independently in each of the mixed gas supply lines. In detail, the flow regulating device may independently regulate the flow rate of the mixed gas flowing through each of the mixed gas supply lines for the flow rate of the mixed gas entering the distribution device to be maintained within a desired flow rate range.

The flow regulating device may be a flow regulating valve.

In another embodiment according to the present disclosure, each of the mixed gas supply lines 50 and 51 may branch from one main supply line or the main header. Alternatively, each of the mixed gas supply lines 50 and 51 may receive at least one gas or both gasses selected from the group consisting of nitrogen and hydrogen from each of individual supply lines.

In another embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate(s) 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save energy by reducing the amount of energy required by the system as needed during its operation, and increase the catalyst replacement cycle by using each catalyst bed uniformly.

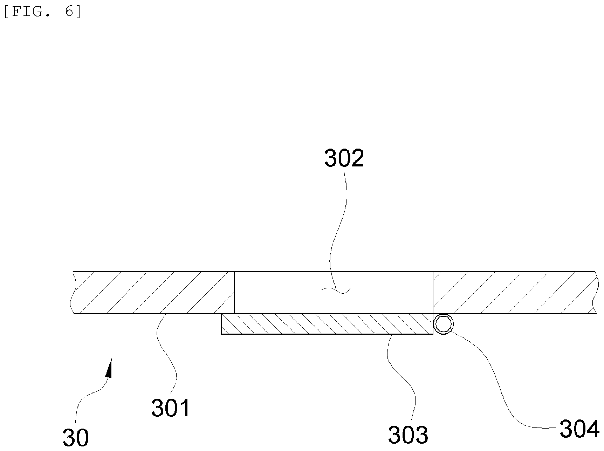

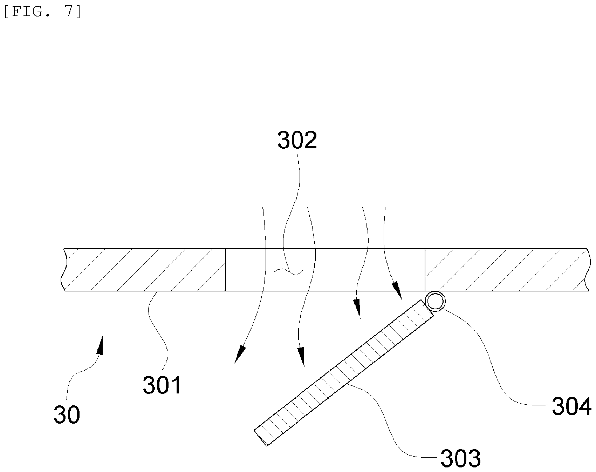

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas is to flow from the downstream to upstream of the backflow prevention plate 30 or 31, the backflow prevention cap 303 will be closed because of the flow of the mixed gas flowing from the downstream to the upstream. By this principle, the backflow prevention plate 30 or 31 according to one embodiment of the present disclosure may prevent the backflow of the mixed gas.

In another embodiment according to the present disclosure, a coupling part of the hinge 304 that is coupled to the hinge 304 may include a spring to apply an elastic force in a direction in which the backflow prevention cap 303 approaches the distribution plate.

In another embodiment according to the present disclosure, the distribution device 40 or 41 may have a disk shape or a toroidal shape, but the embodiments are not limited thereto, and may use a conventional gas distribution device.

In the ammonia synthesis system according to one embodiment of the present disclosure, ammonia may be synthesized at pressures ranging from 1 to 500 bar or 10 to 300 bar.

In addition, in the ammonia synthesis system according to another embodiment of the present disclosure, ammonia may be synthesized at temperatures ranging from 100 to 800°C or 200 to 700°C.

The ammonia synthesis system according to another embodiment of the present disclosure may further include a heat exchanger disposed downstream from each of the two or more catalyst beds to remove heat from an effluent of the catalyst bed. The heat exchanger may surround the catalyst bed or its surroundings. The ammonia synthesis system according to the present disclosure may include an additional heat removal mechanism other than the supply of the cooling mixed gas by further including the heat exchanger. This configuration may permit the flexible operation of the ammonia synthesis system.

In addition, one embodiment of the present disclosure may provide an operation method of the ammonia synthesis system. The same description can be applied to a content overlapping a content of the ammonia synthesis system.

In another embodiment according to the present disclosure, provided is the operation method of the ammonia synthesis system, the method including the following modes selectively performed by the ammonia synthesis system: a first mode in which the regeneration stream is recirculated to the feed supply line; and a second mode in which the regeneration stream is not recirculated to the feed supply line.

In detail, when the fed raw material has a high flow rate, the regeneration stream may be stored in the buffer tank rather than being supplied to the feed supply line, as in the second mode. In addition, when the fed raw material has a low the flow rate, the surge phenomenon may occur in the compressor, which may be prevented by supplying the regeneration stream to the feed supply line as in the first mode. The ammonia synthesis system may flexibly supply the regeneration stream by selectively operating the first mode and the second mode to achieve stable compressor operation by coping with changes in the flow rate of the raw material.

In one embodiment according to the present disclosure, provided is an operation method of the ammonia synthesis system, the method including the following selectively performed modes: a third mode in which the sweep gas is recirculated to the ammonia synthesis reactor; and a fourth mode in which the sweep gas is not recirculated to the ammonia synthesis reactor.

The sweep gas 94 may be recirculated to the ammonia synthesis reactor 10 through the sweep gas recirculation line 88. According to the operation method of the ammonia synthesis system, the system may efficiently cope with changes in the flow rate of the ammonia synthesis raw material by regulating the recirculation of the sweep gas to the ammonia synthesis reactor. For example, the system may maintain an uniform flow rate of the raw material fed into the ammonia synthesis reactor by recirculating the sweep gas to the ammonia synthesis reactor (the third mode) when the raw material fed into the reactor has the low flow rate, and preventing the sweep gas from being recirculated to the reactor (the fourth mode) when the raw material fed into the reactor has the high flow rate.

In another embodiment according to the present disclosure, provided is an operation method of the ammonia synthesis system, which further includes the first ammonia separation device bypass line and the second ammonia separation device bypass line, the method including the following selectively performed modes: a two-stage separation mode in which the syngas passes through the first ammonia separation device and the ammonia rich gas separated from the first ammonia separation device passes through the second ammonia separation device; a first ammonia separation device bypass mode in which the syngas is directly fed into the second ammonia separation device through the first ammonia separation device bypass line; and a second ammonia separation device bypass mode in which the ammonia rich gas is not fed into the second ammonia separation device through the second ammonia separation device bypass line.

In detail, when the flow rate of the syngas including ammonia is high or the ammonia content in the syngas is large, the ammonia synthesis system may be operated in the two-stage separation mode of primarily separating ammonia by using the first ammonia separation device 90 including the ammonia separation membrane, and secondly cooling and separating ammonia by using the second ammonia separation device 83. On the other hand, when the flow rate of the syngas including ammonia is low or the ammonia content in the syngas is small, the ammonia synthesis system may be operated in the second ammonia separation device bypass mode of separating ammonia by only using the first ammonia separation device 90 including the ammonia separation membrane rather than using the second ammonia separation device through the second ammonia separation device bypass line, or by cooling and separating ammonia by only using the second ammonia separation device 83 through the first ammonia separation device bypass line. That is, the ammonia synthesis system of the present disclosure may be selectively operated in one of the two-stage separation modes, the first ammonia separation device bypass mode, and the second ammonia separation device bypass mode as described above to flexibly cope with the ammonia production flow rate that may be changed during the production cycle and still appropriately separate ammonia, thereby providing a flexible process. In addition, when the flow rate of the syngas including ammonia is low or the ammonia content in the syngas is small, the system may prevent the use of the excessive cooling capacity, thereby reducing the energy used for separating ammonia and reducing the costs incurred when separating ammonia.

In addition, one embodiment of the present disclosure may provide an ammonia synthesis method. The same description can be applied to a content overlapping the contents of the ammonia synthesis system and the operation method thereof.

The present disclosure may provide the ammonia synthesis method including S1) compressing mixed gas by a compressor and feeding the compressed gas into an ammonia synthesis reactor; S2) producing syngas including ammonia by reacting the compressed mixed gas by the ammonia synthesis reactor; S3) performing a preliminary separation of separating the syngas produced in S2) into sweep gas including nitrogen and hydrogen and ammonia rich gas; and S4) performing a secondary separation of separating the ammonia rich gas into ammonia and a regeneration stream including nitrogen and hydrogen, wherein the sweep gas is recirculated to the ammonia synthesis reactor.

In the ammonia synthesis method according to the present disclosure, it is possible to flexibly cope with changes in the flow rate that occur during the production cycle, while preventing the surge phenomenon from occurring in the compressor to permit stable compressor operation, address the issues of non-uniform flow rate distribution that occurs before the catalyst bed, and reduced ammonia synthesis yield caused by the temperature deviation between the central and outer parts of the catalyst bed at the beginning of the operation, and reduce the energy used for separating ammonia. In particular, in the ammonia synthesis method according to one embodiment of the present disclosure, the compressor may be stably operated by preventing that the surge phenomenon (or similar phenomenon or disturbance) occurs in the compressor even when the flow rate of the fed raw material for the reaction is changed or is changing. This embodiment supplies the regeneration stream separated from the second ammonia separation device to the feed supply line, which is disposed before the compressor (the first compressor), through a feed recirculation line.

Further, in the ammonia synthesis method according to another embodiment of the present disclosure, the flexible process operation may be provided by flexibly coping with the ammonia separation even when the ammonia production volume is changed as the flow rate of the fed raw material for the reaction is changed. Furthermore, in the ammonia synthesis method according to one embodiment of the present disclosure, the energy required for separating ammonia may be reduced and the costs incurred when separating ammonia may be reduced even when the ammonia production volume is changed as the flow rate of the fed raw material for the reaction is changed.

In another embodiment according to the present disclosure, the ammonia synthesis reactor may include two or more catalyst beds included in the ammonia synthesis reactor; the backflow prevention plate disposed downstream of each of the catalyst beds, optionally except for the catalyst bed disposed at the lowest of the two or more catalyst beds, for preventing the backflow of the mixed gas; the distribution device disposed upstream from each of the two or more catalyst beds and distributing the mixed gas to the catalyst bed; and the mixed gas supply lines arranged to supply the mixed gas to each distribution device.

As set forth above, the ammonia synthesis system according to one embodiment of the present disclosure may cope with changes in the flow rate that occur during the production cycle.

The ammonia synthesis system according to another embodiment of the present disclosure may maintain an uniform flow rate distribution before the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by reducing a temperature deviation between the central and outer parts of the catalyst bed (to make the temperature across the catalyst bed more uniform) at the beginning of its operation.

The ammonia synthesis system according to one embodiment of the present disclosure may improve the ammonia synthesis yield at the beginning of its operation by preheating the catalyst bed at the beginning of its operation.

The ammonia synthesis system according to another embodiment of the present disclosure may save energy by reducing the amount of energy required by the system during its operation.

The ammonia synthesis system according to another embodiment of the present disclosure may increase the catalyst replacement cycle by uniformly using each catalyst bed during the operation.

In the ammonia synthesis system according to another embodiment of the present disclosure, the compressor may stably operate by preventing that the surge phenomenon (or similar phenomenon or disturbance) occurs in the compressor even when the flow rate of the raw material fed into the ammonia synthesis system is changed.

The ammonia synthesis system according to another embodiment of the present disclosure may synthesize ammonia in an eco-friendly manner.

The ammonia synthesis system according to another embodiment of the present disclosure may provide the flexible process operation by flexibly coping with the ammonia separation even when the ammonia production volume is changed as the flow rate of the raw material fed into the ammonia synthesis system is changed.

The ammonia synthesis system according to another embodiment of the present disclosure may reduce the energy required for separating ammonia and reduce the costs incurred when separating ammonia even when the ammonia production volume is changed as the flow rate of the raw material fed into the ammonia synthesis system is changed.

The embodiments described above are only an example to which a principle of the present disclosure is applied, and may further include other embodiments within the scope of the present disclosure. Furthermore, the embodiments may be combined to form additional embodiments.

## Claims

1. An ammonia synthesis system (1) comprising:
a compressor (82) for compressing mixed gas;
a feed supply line (81) for supplying the mixed gas to the compressor (82);
an ammonia synthesis reactor (10) for synthesizing ammonia (92) by feeding the mixed gas compressed by the compressor (82) into the reactor;
a first ammonia separation device (90) for separating syngas (91) produced by the ammonia synthesis reactor (10) into a sweep gas (94) including nitrogen and hydrogen and into an ammonia rich gas (95);
a second ammonia separation device (83) for separating the ammonia rich gas (95) into the ammonia (92) and a regeneration stream (93) including the nitrogen and the hydrogen;
a feed recirculation line (84) for recirculating the regeneration stream (93) to the feed supply line (81); and
a sweep gas recirculation line (88) for recirculating the sweep gas (94) to the ammonia synthesis reactor (10).

2. The system of claim 1, wherein the first ammonia separation device (90) uses a separation membrane to separate the syngas (91), optionally wherein the separation membrane includes at least one selected from the group consisting of natural or synthetic polymers, sulfonated compounds, zeolite framework membranes, polymers including metal salts, ion exchange polymer membranes, and cellulose membranes.

3. The system of claim 1 or 2, wherein the second ammonia separation device (83) cools and separates the ammonia rich gas (95) .

4. The system of any one of claims 1 to 3, further comprising a reactor recirculation line (87) connected from the feed recirculation line (84) to the ammonia synthesis reactor (10), optionally wherein a second compressor (89) is disposed in the reactor recirculation line (87) for compressing the regeneration stream (93) for being fed into the ammonia synthesis reactor (10).

5. The system of any one of claims 1 to 4, wherein the ammonia synthesis reactor (10) includes:
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of the mixed gas;
a distribution device (40, 41) disposed upstream from each of the two or more catalyst beds (20, 21) and distributing the mixed gas to the catalyst bed (20, 21); and
mixed gas supply lines (50, 51) arranged to supply the mixed gas to each distribution device (40, 41).

6. The system of claim 5, further comprising microwave heating device(s) (60, 61) for emitting microwaves to each of the two or more catalyst beds (20, 21), respectively.

7. The system of claim 6, further comprising distribution plates (70, 71) each disposed between the catalyst bed (20, 21) and the distribution device (40, 41).

8. The system of claim 7, further comprising a plurality of mixed gas flow pipes (720) which are fixed to a lower surface of the distribution plate (70, 71) and through which the mixed gas flows.

9. The system of claim 8, wherein:
the mixed gas flow pipe (720) has a bottom surface and a side surface (722) connecting the bottom surface with the distribution plate (70, 71),
a plurality of upper apertures (723) are formed in a side surface (722) of an upper part (722a) of the mixed gas flow pipe (720) spaced apart from each other along a circumference of the pipe,
a plurality of middle apertures (725) are formed in a side surface (722) of a middle part (722b) of the mixed gas flow pipe (720) spaced apart from each other along the circumference,
a plurality of lower apertures are formed in a side surface (722) of a lower part of the mixed gas flow pipe (720) spaced apart from each other along the circumference, and
optionally the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper aperture (723) to be guided toward the middle aperture (725).

10. The system of claim 9, wherein the mixed gas flow pipe (720) further includes a separator plate (729) dividing the upper and middle parts (722b) of the mixed gas flow pipe (720) from each other.

11. The system of claim 5, further comprising a heat exchanger disposed downstream from each of the two or more catalyst beds (20, 21) to remove heat from an effluent of the catalyst bed (20, 21).

12. An operation method of the ammonia synthesis system (1) of claim 1, which further includes a first ammonia separation device bypass line (96) and a second ammonia separation device bypass line (97), the method comprising the following selectively performed modes:
a two-stage separation mode in which the syngas (91) passes through the first ammonia separation device (90) and the ammonia rich gas (95) separated from the first ammonia separation device (90) passes through the second ammonia separation device (83);
a first ammonia separation device bypass mode in which the syngas (91) is directly fed into the second ammonia separation device (83) through the first ammonia separation device bypass line (96); and
a second ammonia separation device bypass mode in which the ammonia rich gas (95) is not fed into the second ammonia separation device (83) through the second ammonia separation device bypass line (97).

13. The operation method of the ammonia synthesis system of claim 12, which switches between the selectively performed modes by procedure (i) or by procedure (ii),
procedure (i) using the two-stage separation mode when the flow rate of the syngas including ammonia is relatively high, or when the ammonia content in the syngas is relatively large;
procedure (ii) using the first ammonia separation device bypass mode or the second ammonia separation device bypass mode when the flow rate of the syngas including ammonia is relatively low, or when the ammonia content in the syngas is relatively small.

14. An ammonia synthesis method comprising:
compressing mixed gas by a compressor (82) and feeding the compressed gas into an ammonia synthesis reactor (10);
producing syngas (91) including ammonia (92) by reacting the compressed mixed gas by the ammonia synthesis reactor (10);
performing a preliminary separation of separating the syngas (91) produced into a sweep gas including nitrogen and hydrogen, and an ammonia rich gas (95); and
performing a secondary separation of separating the ammonia rich gas (95) into the ammonia (92) and a regeneration stream (93) including the nitrogen and the hydrogen,
wherein the sweep gas (94) is recirculated to the ammonia synthesis reactor (10).

15. The method of claim 14, wherein the ammonia synthesis reactor (10) includes:
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of the mixed gas;
a distribution device (40, 41) disposed upstream from each of the two or more catalyst beds (20, 21) and distributing the mixed gas to the catalyst bed (20, 21); and
mixed gas supply lines (50, 51) arranged to supply the mixed gas to each distribution device (40, 41).
